# EUROPEAN PATENT APPLICATION

(11) **EP 4 575 143 A1**
(43) Date of publication of application: **25.06.2025**
(21) Application number: 24166416.8
(22) Date of filing: 26.03.2024
(51) Int. Cl.: E04H 4/12, E04H 4/16

(54) **INTEGRATED SYSTEM FOR WATER SURFACE CLEANING AND CHARGING**

(30) Priority: 22.12.2023 CN 202311775980
(71) Applicant: Yunda H&H Tech (Tianjin) Co., Ltd., Jinghai Economic and Technology Development Zone Tianjin 301600 (CN)
(72) Inventor: WEI, Enyu, Tianjin, 301600 (CN); XU, Hao, Tianjin, 301600 (CN); ZHANG, Huixin, 301600, Tianjin (CN); HAO, Pingyu, Tianjin, 301600 (CN); YANG, Xu, Tianjin, 301600 (CN); YUAN, Yinping, Tianjin, 301600 (CN); PENG, Yu, Tianjin, 301600 (CN)
(74) Representative: Calysta NV

(57) **Abstract**

A water surface cleaning and charging integrated system is provided. The water surface cleaning and charging integrated system includes a water surface cleaning device and a charging base station. The water surface cleaning device is provided with a wireless charging module and a magnetic attraction module. The charging base station includes a fixed mount and a floatable seat movably installed on the fixed mount. The floatable seat is provided with a wireless charging structure and a magnetic attraction structure. The floatable seat is configured to float up and down as water raises and falls, so that a height of the wireless charging structure is matched with a height of the wireless charging module, and a height of the magnetic attraction structure is matched with a height of the wireless charging module.

## Description

### TECHNICAL FIELD

The present disclosure relates to the technical field of water surface cleaning, in particular to a water surface cleaning and charging integrated system.

### BACKGROUND

The water surface cleaning device is mainly used to clean floating objects such as plastic bags, leaves and other garbage floating on the water surface to ensure the cleanliness of the water environment by cleaning the water surface with the water surface cleaning device, and is mainly used in rivers, water sources or swimming pools.

The working principle of the water surface cleaning device is that the device floats on the water surface, collects floating objects into the built-in storage device. In order to effectively clean the water surface, it is necessary for the water surface cleaning device to move constantly on the water surface, and the moving range of the water surface cleaning device needs to cover all or most of the water surface area. The larger the water surface area is, the longer the required running time of the water surface cleaning device is, thus energy supplement of the water surface cleaning device is very important.

Currently, the existing water surface cleaning devices is generally chargeable or is supplemented energy in a battery replacement manner. However, it is necessary to manually determine, according to the running time of the water surface cleaning device, whether energy of the water surface cleaning device needs to be supplemented, and then the water surface cleaning device is taken out of the water to replace the battery thereof, or be charged at a designated position. In this way, it is inconvenient to use.

Therefore, how to supplement the energy of the water surface cleaning device conveniently is the key technical problem to be considered and solved in the field of water surface cleaning technology.

### SUMMARY

The present disclosure aims to provide a water surface cleaning and charging integrated system so as to solve the problems in the prior art. By arranging the charging base station provided with the floatable seat capable of floating up and down along with the water surface, the charging base station can adapt to the up-and-down floating of the water surface cleaning device, so that the water surface cleaning device can be connected to the charging base station on the water surface for being charged when the water surface cleaning device needs to be charged. The purpose that the water surface cleaning device floating on the water surface is connected to the charging base station for being charged is realized, so that the water surface cleaning device does not need to be taken out of the water, thus the system is more convenient to be applied.

In order to achieve the purpose, the present disclosure provides the following solution.

The present disclosure provides a water surface cleaning and charging integrated system, including a water surface cleaning device and a charging base station, wherein the water surface cleaning device is provided with a wireless charging module and a magnetic attraction module, the charging base station includes a fixed mount and a floatable seat movably installed on the fixed mount, the floatable seat is provided with a wireless charging structure and a magnetic attraction structure, and the floatable seat is configured to float up and down as water raises and falls, so that a height of the wireless charging structure is matched with a height of the wireless charging module, and a height of the magnetic attraction structure is matched with a height of the magnetic attraction module.

Preferably, the fixed mount includes an installing panel and an installing support, the installing panel includes a front panel, a rear panel and a top plate, the front panel is connected to the floatable seat, and the rear panel is connected to the installing support.

Preferably, the floatable seat includes a floatable support plate, a guide frame is arranged on the floatable support plate, a guide wheel is installed on the guide frame, a strip-shaped guide hole is formed in the front panel, a guide slot parallel to the strip-shaped guide hole is formed in a back of the front panel, the guide frame passes through the strip-shaped guide hole, and the guide wheel is located in the guide slot.

Preferably, the floatable seat includes a front shield installed on the floatable support plate, the front shield and the floatable support plate enclose an installing space, buoyancy materials and a seal cavity are arranged in the installing space, and the wireless charging structure, the magnetic attraction structure and a communication structure are arranged in the seal cavity.

Preferably, the installing support includes an adjusting frame and a support frame, the adjusting frame is installed on the rear panel, a first installing hole is formed in the adjusting support, a plurality of second installing holes are formed in the support frame, and the first installing hole is capable of being connected to the different second installing holes to get the adjusting frame with different installing heights.

Preferably, the water surface cleaning device includes a main body, a cover and a filter basket, the main body is formed with an opening for the filter basket to get into and out of the main body, one side of the opening is provided with a buckle, two opposite sides of the filter basket are respectively provided with a hinge part and a clamping part, the hinge part is hinged to one side of the cover, an other side of the cover is configured for being clamped to the buckle, and the other side of the cover is capable of pressing against the clamping part; one side, where the hinge part is located, of the filter basket is provided with a limiting rib, a limiting surface is arranged at a position on an inner side of the opening corresponding to the limiting rib, the limiting rib and the limiting surface extend in an in-and-out direction of the filter basket, and the limiting surface restricts the limiting rib from rotating about the clamping part.

Preferably, the cover is provided with a hollow-out handle, another side, where the clamping part is located, of the filter basket is provided with a boss for being held and extends towards the handle; the main body includes propellers, a power supply and a controller which are located on a same side of the main body and far away from the handle, an inlet of the filter basket and the clamping part is located on another same side of the main body, and when the water surface cleaning device is lifted by means of the handle, the inlet faces upwards.

Preferably, the inlet is provided with a rolling brush connected to a first motor, a flexible barrier strip is arranged on one side, parallel to the rolling brush, of the inlet, and a rotation direction, at the flexible barrier strip, of the rolling brush faces the filter basket.

Preferably, the rolling brush includes a central shaft and guide vanes radially distributed on the central shaft, the guide vanes include sheet-like guide vanes and/or columnar guide vanes, and when both the sheet-like guide vanes and the columnar guide vanes are arranged on the central shaft, the sheet-like guide vanes and the columnar guide vanes are distributed at intervals in an axial direction and a circumferential direction.

Preferably, the main body is provided with a watertight cabin and a short wire groove, the power supply and the controller are arranged in the watertight cabin, different wires are led into the short wire groove to be gathered into a multi-core wire and led out, and the multi-core wire is connected to the watertight cabin via a watertight joint; the watertight cabin is connected to the main body by means of a detachable structure, and the multi-core wire is connected to the watertight cabin by means of another detachable structure.

Compared with the prior art, the present disclosure has the following technical effects.

According to the water surface cleaning and charging integrated system, the charging base station matched with the water surface cleaning device, the charging base station is provided with a floatable seat. The floatable seat can float with the up-and-down floating of the water. The floatable seat is provided with a wireless charging structure and a magnetic attraction structure. The up-and-down floating of the water surface cleaning device is driven by the water, so that the floatable seat can also float up and down with the water, thus the charging base station can be adapted to the up-and-down floating of the water surface cleaning device. When the water surface cleaning device needs to be charged, the water surface cleaning device in the floating state can be connected to the charging base station for charging. The water surface cleaning device does not need to be taken out of the water, so that the water surface cleaning device in the floating state on the water surface is connected to the charging base station for charging, thus the inconvenience caused by frequently moving the water surface cleaning device out of the water surface for charging is reduced, and the convenience of application is improved.

### BRIEF DESCRIPTION OF THE DRAWINGS

To more clearly illustrate the present embodiment of the present disclosure or the technical solution in the prior art, the following briefly introduces the accompanying drawings to be used in the present embodiment. Apparently, the accompanying drawings in the following description show merely some embodiments of the present disclosure, and those skilled in the art may still derive other drawings from these attached figures without creative efforts.
FIG. 1 is a schematic diagram of a water surface cleaning device and a charging base station which are in a connection state according to the present disclosure.
FIG. 2 is a schematic diagram of the charging base station according to the present disclosure.
FIG. 3 is an exploded structural schematic diagram of the charging base station according to the present disclosure.
FIG. 4 is a schematic diagram of a floatable seat and a front panel which are in a connection state according to the charging base station in the present disclosure.
FIG. 5 is an exploded structural schematic diagram of the floatable seat in the charging base station according to the present disclosure.
FIG. 6 is a schematic diagram of the water surface cleaning device according to the present disclosure.
FIG. 7 is a schematic diagram of the water surface cleaning device viewed in another angle according to the present disclosure.
FIG. 8 is a sectional structural schematic diagram of section A in FIG. 7.
FIG. 9 is a schematic diagram of the water surface cleaning device view in yet another angle according to the present disclosure.
FIG. 10 is an installation diagram of foam in the water surface cleaning device according to the present disclosure.
FIG. 11 is a schematic diagram of a watertight cabin and a short wire groove in the water surface cleaning device according to the present disclosure.

Reference signs: 1 water surface cleaning device; 11 main body; 12 cover; 13 filter basket; 14 rolling brush; 15 propeller; 16 watertight cabin; 17 short wire groove; 18 wireless charging module; 19 magnetic attraction module; 110 switch; 120 wired charging module; 111 buckle; 112 ultrasonic probe; 113 front anti-collision strip; 114 side anti-collision strip; 115 anti-collision wheel; 116 foam; 117 anti-grounding structure; 121 handle; 131 boss; 132 flexible barrier strip; 141 first motor;
2 charging base station; 21 fixed mount; 211 installing panel; 2111 front panel; 2112 rear panel; 2113 top plate; 2114 guide slot; 2115 guide hole; 212 installing support; 2121 adjusting frame; 2122 support frame; 2123 first installing hole; 2124 second installing hole; 22 floatable seat; 221 floatable support plate; 2211 guide frame; 2212 guide wheel; 2213 roller; 222 front shield; 2221 installing space; 2222 seal cavity; 223 buoyancy material; 224 seal ring; 225 wireless charging structure; 226 magnetic attraction structure; and 227 communication structure.

### DETAILED DESCRIPTION OF THE EMBODIMENTS

The following clearly and completely describes the technical solution in the embodiments of the present disclosure with reference to the embodiments of the present disclosure. Apparently, the described embodiments are merely a part rather than all of the embodiments of the present disclosure. Based on the embodiment in the present disclosure, all other embodiments acquired by the person skilled in the art under the premise of without creative efforts belong to the scope of the present disclosure.

The present disclosure aims to provide a water surface cleaning and charging integrated system so as to solve the problems in the prior art. By arranging the charging base station provided with the floatable seat capable of floating up and down along with the water surface, the charging base station can adapt to the up-and-down floating of the water surface cleaning device, so that the water surface cleaning device can be connected to the charging base station on the water surface for being charged when the water surface cleaning device needs to be charged. The purpose that the water surface cleaning device floating on the water surface is connected to the charging base station for being charged is realized, so that the water surface cleaning device does not need to be taken out of the water, thus the system is more convenient to be applied.

To make the foregoing objective, features and advantages of the present disclosure clearer and more comprehensible, the present disclosure is further described in detail below with reference to the accompanying drawings and specific embodiments.

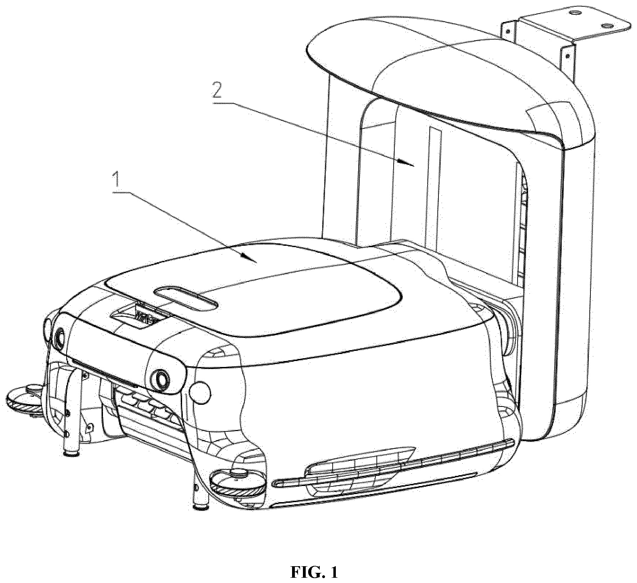

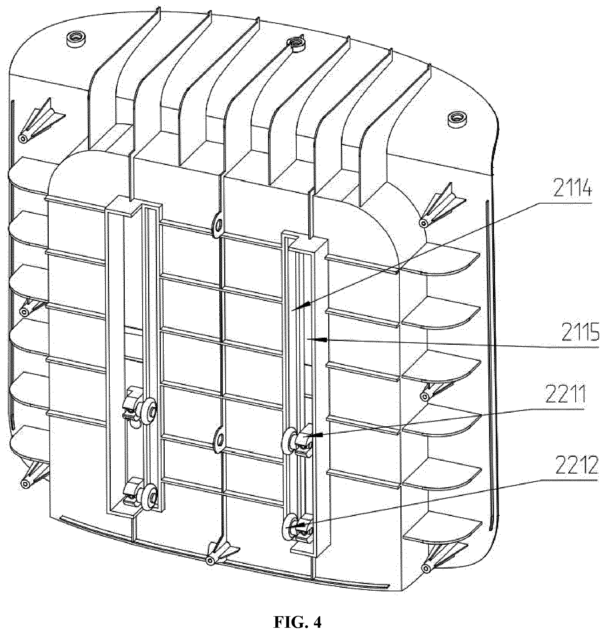

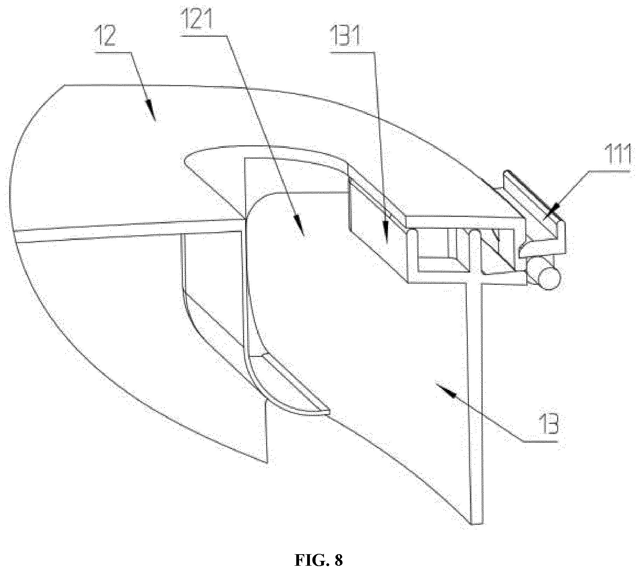

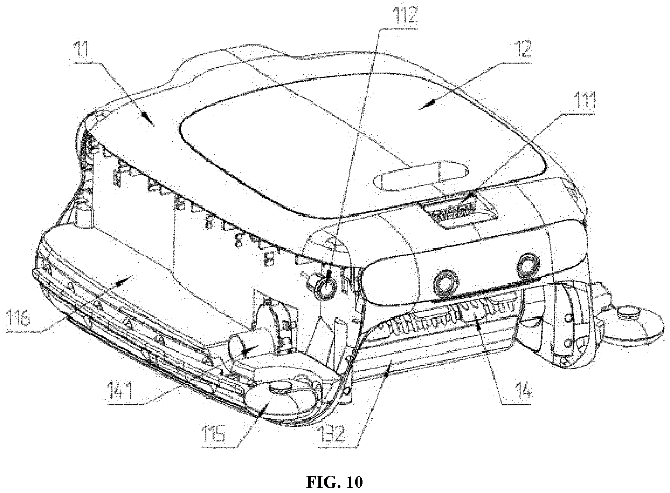

As shown in FIG. 1 to FIG. 11, the present disclosure provides a water surface cleaning and charging integrated system, including a water surface cleaning device 1 and a charging base station 2. When working, the water surface cleaning device 1 can float on the water surface to collect and clean garbage on the water surface, and the charging base station 2 can be fixed on the edge of the pool. When the water surface cleaning device 1 needs to be charged, the water surface cleaning device 1 moves to the charging base station 2, is connected to the charging base station 2 and is charged automatically. Specifically, the water surface cleaning device 1 is provided with a wireless charging module 18 and a magnetic attraction module 19. The charging base station 2 includes a fixed mount 21 and a floatable seat 22 movably installed on the fixed mount 21. The fixed mount 21 is installed on a fixture on the edge of the pool. The floatable seat 22 floats on the water surface. The floatable seat 22 rises and falls as the water surface rises and falls. The floatable seat 22 is provided with a wireless charging structure 225 and a magnetic attraction structure 226. The wireless charging structure 225 is configured for making contact with the wireless charging module 18 and wirelessly charging the water surface cleaning device 1. The magnetic attraction structure 226 is configured for providing attraction with the magnetic attraction module 19 to effectively fix the water surface cleaning device, so that effective contact between the wireless charging structure 225 and the wireless charging module 18 is maintained. The floatable seat 22 floats up and down as the water raises and falls, so that the height of the wireless charging structure 225 is matched with the height of the wireless charging module 18, and the height of the magnetic attraction structure 226 is matched with the height of the magnetic attraction module 19.

According to the water surface cleaning and charging integrated system, the charging base station 2 matched with the water surface cleaning device 1 is arranged, wherein the charging base station 2 is provided with the floatable seat 22 which can float up and down as the water rises and falls and is provided with the wireless charging structure 225 and the magnetic attraction structure 226, The water rises and falls to drive the water surface cleaning device 1 and the floatable seat 22 to float up and down simultaneously, so that the charging base station 2 can be adapt to the up-and-down floating of the water surface cleaning device 1. When the water surface cleaning device 1 needs to be charged, the water surface cleaning device 1 in a floating state can be connected to the charging base station 2 for being charged without taking the water surface cleaning device 1 out of the water, which realizes the purpose that the water surface cleaning device 1 floating on the water surface state can be connected to the charging base station 2 for being charged, so that the inconvenience caused by frequently taking the water surface cleaning device 1 out of the water surface for being charged is reduced, and the convenience of application is improved.

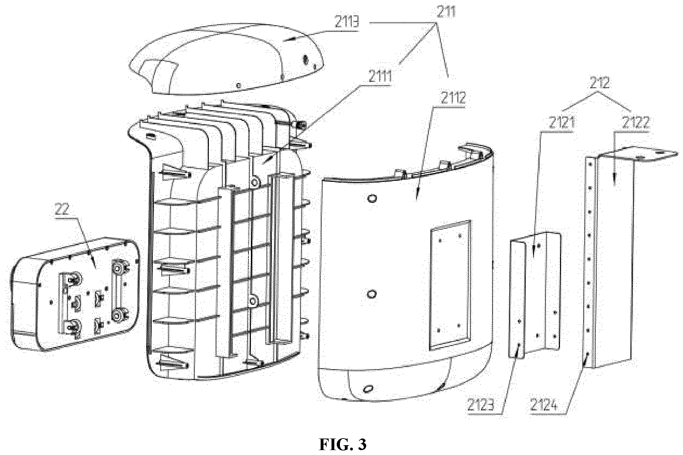

As shown in FIG. 3, the fixed mount 21 includes an installing panel 211 and an installing support 212, wherein the installing panel 211 includes a front panel 2111, a rear panel 2112 and a top plate 2113 arranged on the tops of the front panel 2111 and the rear panel 2112. The front panel 2111 covers and is buckled to the rear panel 2112. The top plate 2113 extends towards the front panel 2111 to form a convex roof for shading sun and sheltering rain. The front panel 2111 is connected to the floatable seat 22, and the rear panel 2112 is connected to the installing support 212.

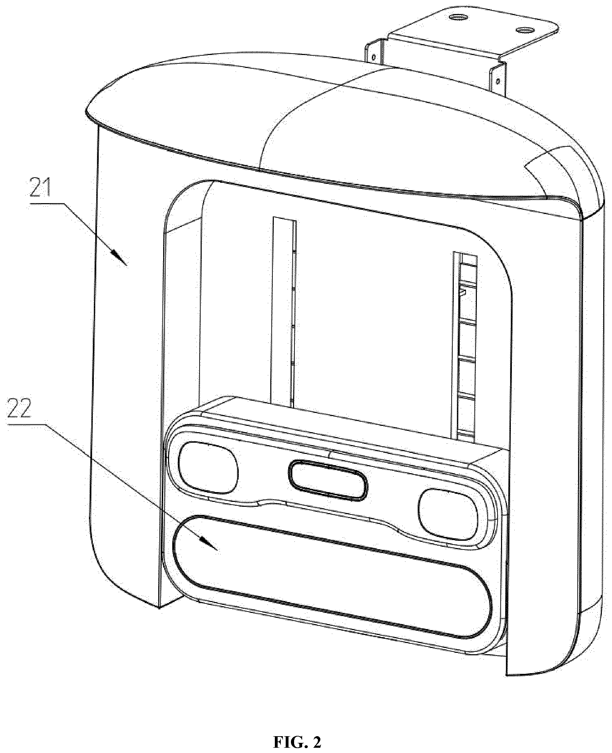

As shown in FIG. 2, FIG. 4 and FIG. 5, the floatable seat 22 includes a floatable support plate 221. At least two groups of guide frames 2211 in parallel are vertically arranged on the floatable support plate 221. A guide wheel 2212 is installed on the guide frame 2211. The axial of the guide wheel 2212 is vertical to the extending direction of the guide frame 2211. At least two groups of guide wheels 2212 are arranged on the guide frame 2211in the length direction thereof. By means of the arrangement of the guide frames 2211 and the guide wheels 2212, planar movement of the floatable seat 22 relative to the fixed mount 21 can be formed, so that the moving stability of the floatable seat 22 is maintained, and clamping stagnation of the floatable seat 22 is avoided. Specifically, a strip-shaped guide hole 2115 is formed in the front panel 2111. A guide slot 2114 parallel to the strip-shaped guide hole 2115 is formed in the back of the front panel 2111. The guide slot 2114 can be arranged on the inner side or outer side of the strip-shaped guide hole 2115, which is related to the positions of the guide wheel 2212 and the guide frame 2211. The guide frame 2211 passes through the strip-shaped guide hole 2115, and the guide wheel 2212 is located in the guide slot 2114, at this time, the guide wheel 2212 and the floatable support plate 221 are respectively located on two opposite sides of the front panel 2111, so that the installation of the floatable seat 22 and the fixed mount 21 is realized. At the same time, the restriction of the strip-shaped guide hole 2115 in the guide frame 2211 and the restriction of the guide slot 2114 in the guide wheel 2212 can restrict the moving distance and the moving range of the floatable seat 22. In order to further reduce the friction resistance between the floatable support plate 221 and the front panel 2111, the floatable support plate 221 can be provided with rollers 2213 evenly distributed, so that the floatable support plate 221 and the front panel 2111 are in rolling connection. In addition, in order to better restrict the vertical position of the floatable seat 22, the floatable seat 22 can be arranged in an inverted U-shaped space formed by the front panel 2111, and an inner wall of the inverted U-shaped space is used to guide a side wall of the floatable seat 22.

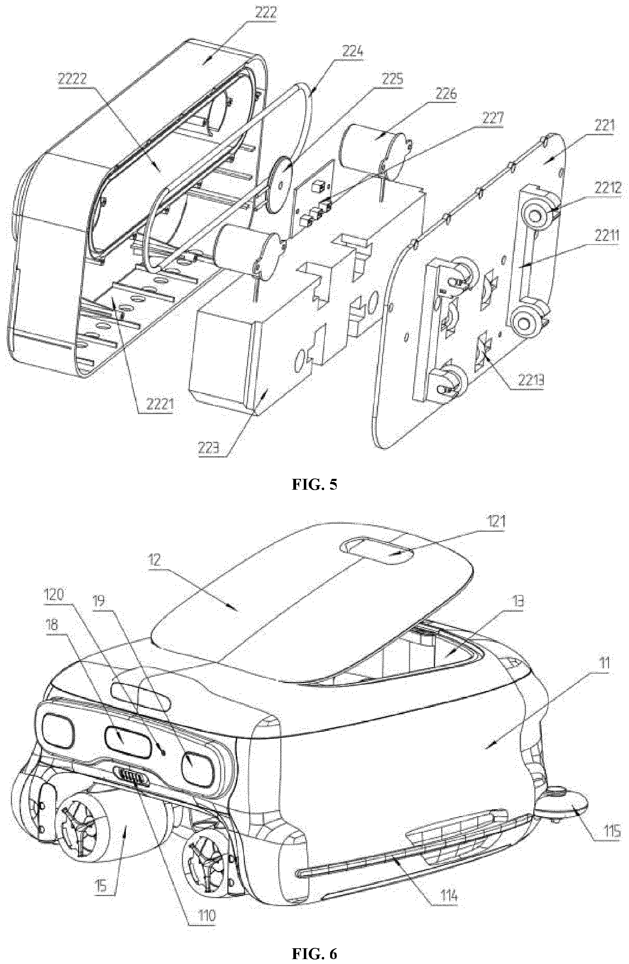

As shown in FIG. 5, the floatable seat 22 includes a front shield 222 installed on the floatable support plate 221. The front shield 222 and the floatable support plate 221 enclose an installing space 2221 after being connected. Buoyancy materials 223 and a seal cavity 2222 are arranged in the installing space 2221. The buoyancy materials 223 can be light materials such as foam materials. The density of the buoyancy materials 223 is smaller than that of water to provide the whole buoyancy of the floatable seat 22 to ensure that the floatable seat 22 can float on the water surface. It should be noted that the buoyancy provided by the buoyancy materials 223 can be adjusted by adjusting the volume of the buoyancy materials 223, so that the floating height of the floatable seat 22 on the water surface should be matched with the floating height of the water surface cleaning device 1. The seal cavity 2222 is internally provided with the wireless charging structure 225, the magnetic attraction structure 226 and a communication structure 227. The communication structure 227 is configured for receiving or sending corresponding signals to control the start and stop of the wireless charging structure 225 and the magnetic attraction structure 226. An annular groove is formed in the circumferential wall of the seal cavity 2222, and a seal ring 224 is provided in the annular groove. After the front shield 222 is installed on the floatable support plate 221, the circumferential wall of the seal cavity 2222 and the floatable support plate 221 can be tightly attached to realize the watertight sealing of the seal cavity 2222.

As shown in FIG. 3, the installing support 212 includes an adjusting frame 2121 and a support frame 2122. The adjusting frame 2121 is installed on the rear panel 2112. The adjusting frame 2121 can be a U-shaped frame body. The bottom surface of the U-shaped frame body is connected to the rear panel 2112. A first installing hole 2123 is formed in the side wall of the adjusting frame 2121. The support frame 2122 is provided with a vertical support arm matched with the U-shaped frame body. A plurality of second installing holes 2124 are formed in the support arm. The first installing hole 2123 is capable of being connected to the different second installing holes 2124 to get the adjusting frame 2121with different installing heights, so as to suit for installation in different working conditions.

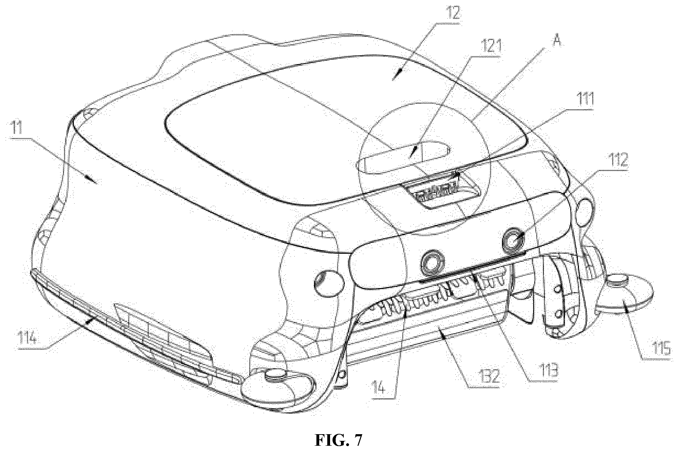

As shown in FIG. 7 to FIG. 11, the water surface cleaning device 1 includes a main body 11, a cover 12 and a filter basket 13, wherein the main body 11 is a body of the water surface cleaning device 1, and includes a shell and various components installed on the shell, such as a power supply structure, a control structure, a driving structure. The main body 11 is formed with an opening for the filter basket 13 to get into and out of the main body 11. The filter basket 13 is placed into the main body 11 through the opening to realize installation of the filter basket 13 to the main body 11. The main body 11 drives the filter basket 13 to work to collect garbage such as floating objects on the water surface, the filter basket 13 is removed through the opening, so that the garbage within the filter basket 13 can be treated, and the filter basket 13 is cleaned. A buckle 111 is arranged on one side of the opening. The buckle 111 can be of an overturning clamping structure, of which the clamping force is provided by a snap spring, the buckle 111 can be opened once the clamping force of the snap spring is overcame. Two sides, opposite to each other, of the filter basket 13 are respectively provided with a hinge part and a clamping part. The hinge part is hinged to one side of the cover 12. For example, a shaft hole is formed in the hinge part, the cover 12 is provided with a rotating shaft, and the rotating shaft is installed in the shaft hole to realize rotational connection of the hinge part and the cover 12. The other side of the cover 12 can be provided with a clamping groove. The clamping groove can be clamped to the buckle 111, that is, the buckle 111 can be clamped within the clamping groove. It should be noted that the clamping part of the filter basket 13 is located below the cover 12, and the other side of the cover 12 presses against the clamping part 37 when the buckle 111 is clamped within the clamping groove. After the cover 12 is clamped with the buckle 111, the filter basket 13 is simultaneously clamped.

One side of the filter basket 13 where the hinge part is located is provided with a limiting rib. One or more limiting ribs can be arranged. Preferably, two limiting ribs distributed on both sides of the hinge part are arranged. A limiting surface is arranged at the position on the inner side of the opening of the main body 11 corresponding to the limiting rib. The limiting rib and the limiting surface extend in the in-and-out direction of the filter basket 13. After the filter basket 13 is installed, the limiting rib is in contact with the limiting surface. The limiting surface can only slide relative to the limiting rib, and the limiting rib can be prevented from rotating about the clamping part by means of the limiting surface. Specifically, in the state that the clamping part is clamped, the clamping part is equivalent to the rotation center, and the filter basket 13 can rotate about the clamping part without the limiting rib and the limiting surface are arranged.

According to the water surface cleaning and charging integrated system, by means of the cooperation between the limiting rib and the limiting surface, the rotation of the filter basket 13 about the clamping part can be restricted, but the translation in the in-and-out direction of the filter basket 13 is allowed. The translation in the in-and-out direction of the filter basket 13 is under the clamping of the buckle 111 and the rotation of the filter basket 13 about the clamping part cannot be restricted. Thus, the filter basket 13 can be stably installed within the main body 11 by means of the restriction of the rotation and the translation restriction in the in-and-out direction of the filter basket 13 on the filter basket 13. When the filter basket 13 is disassembled, the filter basket 13 can be conveniently taken out only by releasing the clamping of the buckle 111, so that the installation and disassembly of the filter basket are more convenient. Furthermore, on this basis, as the cover 12 is hinged to the filter basket 13, the cover 12 is taken out together when the filter basket 13 is taken out, and the filter basket 13 is covered by the cover 12, so that garbage in the filter basket 13 can be prevented from being scattered during cleaning the filter basket 13, and environmental pollution can be avoided.

As shown in FIG. 6 to FIG. 8, the cover 12 is provided with a hollow-out handle 121, and one side of the filter basket 13 where the clamping part is located is provided a boss 131 which is configured for being held and extends towards the handle 121. The cover 12 is located above the boss 131, after a hand is put into the handle 121, the boss 131 can be dragged to taken out the filter basket 13 and the cover 12 together after the clamping of the buckle 111 to the cover 12 is released.

A supporting projection can be arranged on the inner side of the opening in the main body 11. The supporting projection extends circumferentially along the inner-diameter side of the opening and can be configured for supporting an edge of the cover 12. The edge away from the handle 121 can cause interference between the cover 12 and the main body 11 when the cover 12 is turned over, so that the cover 12 cannot be completely opened, and can be opened only at a certain angle. The cover 12 can be completely opened only after the filter basket 13 is taken out together with the cover 12.

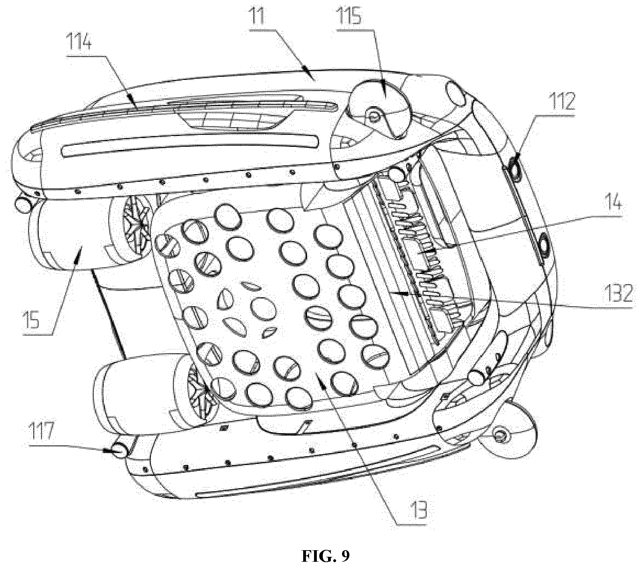

As shown in FIG. 6 and FIG. 9, the main body 11 includes propellers 15, a power supply, a controller and the like. The propellers 15, the power supply and the controller are located on the same side of the main body 11 where the center of gravity of the whole water surface cleaning device is located and which is far away from the handle 121, that is, the side far away from the handle 121 is the center-of-gravity side, and the side where the handle 121 is located is the non-center-of-gravity side. In addition, the inlet of the filter basket 13 is located on the same side as the clamping part, that is, on the non-center-of-gravity side. When the water surface cleaning device 1 is lifted via the handle 121, the center-of-gravity side naturally hangs downwards, while the inlet located on the non-center-of-gravity side naturally faces upwards. With this arrangement, when the water surface cleaning device 1 is lifted, the inlet of the filter basket 13 is avoided from facing downwards so that the garbage in the filter basket 13 can be prevented from falling, thus the garbage can be effectively prevented from falling and polluting the surrounding environment during transfer of the water surface cleaning device 1.

As shown in FIG. 7 and FIG. 9, the inlet of the filter basket 13 is provided with a rolling brush 14. The rolling brush 14 is connected to a first motor 141. The first motor 141 can be connected to the rolling brush 14 via the transmission gear, so as to drive the rolling brush 14 to rotate, so that the garbage on the water surface is sucked into the filter basket 13. A flexible barrier strip 132 is arranged on one side, parallel to the rolling brush 14 of the inlet. Generally, the flexible barrier strip 132 is located on the lower side of the inlet. The rotation direction, at the flexible barrier strip 132, of the rolling brush 14 faces the filter basket 13. When the garbage is sucked, the flexible barrier strip 132 can be deformed toward the filter basket 13 under the driving of the rolling brush 14, so that larger garbage can be sucked. However, after the garbage is sucked into the filter basket 13, the gravity of the garbage is not enough to deform the flexible barrier strip 132 outwards, so that the garbage can be prevented from escaping. It should be noted that the flexible barrier strip 132 can be installed in the installing holes formed in the filter basket 13 via a plurality of installing buckles, and the flexible barrier strip 132 can be installed on the inner side or outer side of the filter basket 13. In the case that the flexible barrier strip 132 is installed on the inner side of the filter basket 13, when the flexible barrier strip 132 is deformed inwards, only the connection position of the installing buckles can restrict the flexible barrier strip 132, so that the flexible barrier strip 132 can obtain a larger deformation range, and then larger garbage can be sucked into the filter basket through the inlet, which can realize a good sealing effect, that is, prevent the garbage from escaping through the inlet, and facilitate the garbage enter the filter basket through the inlet.

The filter basket 13 is integrally of a hollow-out structure. A filter screen can be arranged at each hollow-out hole and small hollow-out holes can also be formed in the filter basket 13 to ensure that water can flow freely and the garbage and other sundries sucked into the filter basket 13 are remained inside the filter basket 13. A chemical dosing box filled with solid chemicals can be arranged at the bottom of the filter basket 13, so that the water environment can be sterilized by the chemicals. A chemical box cover can be arranged on the top of the chemical dosing box. The chemical box cover can be connected to protrusions on the chemical dosing box through V-shaped grooves formed in the peripheral wall of the chemical box cover to realize connection between the chemical dosing box and the chemical box cover, so that the chemicals can be restricted in the space formed by the chemical dosing box and the chemical box cover. The chemical box cover can be solid or provided with hollow-out holes. The bottom of the chemical dosing box is shared with the bottom of the filter basket 13 and provided with the hollow-out holes, so that the chemicals can be gradually dissolved and then enter external water outside of the water surface cleaning device.

The rolling brush 14 includes a central shaft and guide vanes radially distributed on the central shaft. The shape of the guide vane can be in various forms. For example, the guide vanes are all sheet-like guide vanes, the guide vanes are all columnar guide vanes, the guide vanes are in the forms of hairbrushes, the guide vanes are all elliptical guide vanes, or the guide vanes include sheet-like guide vanes and columnar guide vanes. In the case that the guide vanes include both sheet-like guide vanes and columnar guide vanes, the width of the sheet-like guide vane is wider than that of the columnar guide vane, and the sheet-like guide vanes and the columnar guide vanes are distributed at intervals in the axial direction and circumferential direction, so that the rotation resistance can be reduced, and the garbage floating on the water surface can also be collected better. In addition, the thickness of the middle part of the guide vane can be equal to that of the edge of the guide vane, or the thickness of the middle part of the guide vane can be larger than that of the edge of the guide vane, so that the strength of the guide vane can be improved. As the strength of the guide vane is improved, the guide vane with longer radial extension length can be arranged, so that a larger inlet area can be covered, that is, an inlet with a larger size can be formed, so that garbage is collected more conveniently.

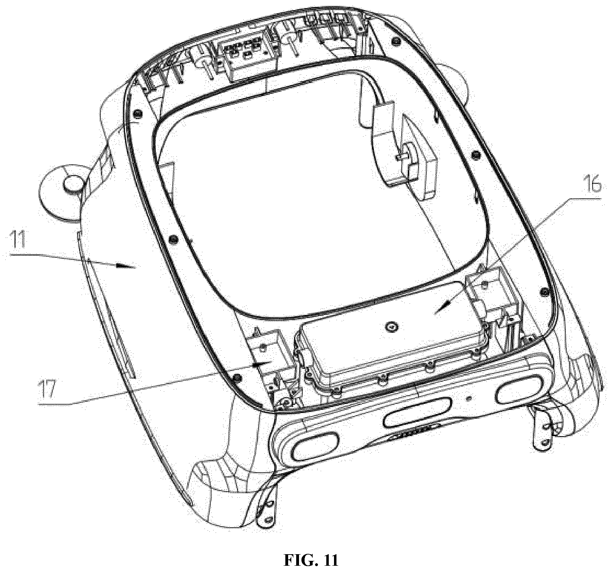

As shown in FIG. 11, the main body 11 is provided with a watertight cabin 16 and a short wire groove 17. The watertight cabin 16 is in a higher watertight grade, so that water is avoided from entering into the watertight cabin 16 to influence normal operation of electronic components, such as the power supply and the controller, arranged in the watertight cabin 16. Different wires are led into the short wire groove 17 to be gathered into a multi-core wire and led out, and the multi-core wire is connected to the watertight cabin 16 via a watertight joint. Thus, the number of wires entering the watertight cabin 16 can be effectively reduced, the number of wire holes needed to be sealed in the watertight cabin 16 can be reduced, so that the possibility of water entering the watertight cabin 16 can be reduced.

Furthermore, the watertight cabin 16 is connected to the main body 11 by means of a detachable structure, such as screw connection. The watertight cabin 16 includes a cabin body and a cabin cover. The cabin body is provided with a connecting structure. The connecting structure is installed on the main body 11 via screws to realize detachable installation of the cabin body. The cabin cover may be provided with a watertight and breathable structure, so that the stability of the watertight cabin 16 still can be maintained when pressure changes or water vapor is generated in the watertight cabin 16 since temperature changes therein. The multi-core wire can be connected to the watertight cabin 16 by means of a detachable structure, such as a quick connector. With the above arrangement, when the controller or the power supply fails, only the watertight cabin 16 needs to be removed for replacement or maintenance, which is convenient for later maintenance and repair.

As shown in FIG. 6 and FIG. 9, the propellers 15 are arranged on the left and right sides of the main body 11 in parallel. The propellers 15 on both sides work simultaneously to form thrust force to push the water surface cleaning device 1 to travel. The propeller 15 includes a barrel cabin. The barrel cabin is cylindrical. Both ends of the barrel cabin are opened to form a perforated water flow channel. The barrel cabin is internally provided with an axial flow blade. coaxially connected to a second motor located in the barrel cabin. It should be noted that in the case that the axial flow blades of the two propellers 15 rotate in the same direction (counterclockwise or clockwise), the whole water surface cleaning device 1 may be deflected. However, due to the small volume of the water surface cleaning device 1, the relative distance between the two axial flow blades is not large, and the caused deflection force can be ignored. In addition, the two axial flow blades rotating in the same direction can facilitate installation, reduce the development cost of the mold, and thus can be adopted. In fact, the stability of the operation state can be best maintained in the case that the axial flow blades of the two propellers 15 rotate in different directions is adopted, that is, the axial flow blades of the two propellers 15 rotates counterclockwise and clockwise respectively. Therefore, in application, the two axial flow blades rotating in the different directions can be adopted without consideration of the cost. Baffles are respectively arranged at both ends of the barrel cabin, and the baffle includes an annular ring connected to the barrel cabin and spokes arranged on the inner-diameter side of the annular ring. The number of the spokes can be three or more. The spokes can prevent garbage or sundries from entering the barrel cabin to a certain extent, thus preventing the garbage or sundries from interfering with the rotation of the axial flow blades.

The baffle is connected to the barrel cabin via a quick-release structure. The quick-release structure includes an annular guide groove arranged on the barrel cabin and an annular guide block arranged on the annular ring. The annular guide groove corresponds to the annular guide block in position. The annular guide groove faces towards the outer-diameter side of the barrel cabin and is provided with an annular guide port and a limiting part. The annular guide block faces towards the inner-diameter side of the barrel cabin, can enter the annular guide groove through the guide port, and slides in the annular guide groove. The annular guide groove is internally provided with a wedge-shaped block. A wedge-shaped groove is formed in the annular guide block. After the annular guide groove and the annular guide block rotate in place, the wedge-shaped block can be clamped in the wedge-shaped groove to realize circumferential limit, so that the installation of the annular guide groove and the annular guide block is relatively convenient. After the baffle is twisted reversely by force, the wedge-shaped block can be separated from the wedge-shaped groove, and then the baffle can be quickly disassembled.

The baffle can also be of another quick-release structure. Specifically, the other quick-release structure includes an annular guide groove arranged on the barrel cabin and an annular guide block arranged on the annular ring. The annular guide groove corresponds to the annular guide block in position. Axial through holes are formed in the annular guide groove. The through hole includes expanding holes and reducing holes which are circumferentially connected and distributed. The annular guide block extends in the axial direction, can enter the annular guide groove through the expanding holes, and slides in the annular guide groove. The annular guide block is an elastic column with radially deformable elasticity, and a free end of the elastic column is expanded to form a clamping joint. The elastic column penetrates through the expanding hole and rotates along the annular guide groove. After rotating in place, the elastic column can be clamped into the reducing hole to realize circumferential limit, which is convenient to install. Furthermore, after the baffle is twisted reversely by force, the elastic column can be separated from the reducing hole, so that the baffle can be quickly disassembled.

By means of the arrangement of the installing structure of the baffle, it is convenient to disassemble the baffle, clean the sundries in the barrel cabin, repair the second motor and the axial flow blade, and then install the baffle.

As shown in FIG. 6, FIG. 7 to FIG. 9, the main body 11 is provided with a front anti-collision strip 113 and side anti-collision strips 114 arranged on the left and right sides thereof. The anti-collision strip is made of soft rubber such as silica gel, rubber or TPU (thermoplastic polyurethane elastomer), which can play the roles of shock absorption and buffering to avoid bumping damage. Anti-collision wheels 115 are arranged on both sides of the inlet the filter basket 13 in front of the main body 11. The anti-collision wheels 115 are installed in grooves formed in the main body 11 via C-shaped frames and are horizontally and rotatably arranged. Once the left front side or the right front side of the water surface cleaning device hit an obstacle, the anti-collision wheels 115 can rotate to avoid the obstacle.

As shown in FIG. 9, an anti-grounding structure 117 is arranged below the main body 11, and the anti-grounding structure 117 is provided with a telescopic column. The telescopic column is provided with an elastic buckle. By inserting the telescopic column into the anti-grounding structure 117 in different depths, the elastic buckle is clamped into different clamping holes in the anti-grounding structure 117 to adjust the length of the telescopic column extending into the anti-grounding structure 117. Different lengths of the telescopic column extending into the anti-grounding structure 117 can adapt to different depths of shallow water, so that he water surface cleaning device is blocked in front of the shallow water areas such as steps by means of the telescopic column to avoid the water surface cleaning device 1 from continuing to travel and grounding above the shallow water areas such as steps.

As shown in FIG. 6, the main body 11 is provided with a wireless charging module 18, a magnetic attraction module 19 and a switch 110. The forward and reverse rotation of the axial flow blades 53 in the propellers 15 is controlled, so that the traveling direction of the water surface cleaning device 1 can be controlled. The steering of the water surface cleaning device 1 can be controlled through different acceleration and deceleration of the two propellers 15, so that the water surface cleaning device 1 can travel towards the charging base station 2. When the water surface cleaning device 1 approaches the charging base station 2, the magnetic attraction module 19 attracts and is connected to the charging position of the charging base station 2, so that the wireless charging module 18 can be connected to the charging base station 2 and then the automatic charging function is realized. In addition, a wired charging module 120 may be arranged on one side where the wireless charging module 18 is located, so that manual charging can be performed once manual connection is performed.

As shown in FIG. 7, ultrasonic probes 112 can be arranged in front of the main body 11, and a plurality of ultrasonic probes 112 can be arranged according to the width of the main body 11. In a specific embodiment, four ultrasonic probes can be arranged, so that obstacles in front of the main body 11 can be detected by mean of the ultrasonic probes 112, and signals detected can be transmitted to the controller, so that operations such as controlling the steering of the water surface cleaning device 1 can be performed to avoid obstacles.

As shown in FIG. 11, both sides of the bottom of the main body 11 protrude outward, and the structures protruding outward can ensure the stability of the whole structure of the water surface cleaning device. A light material, such as foam 116, is arranged inside the structure protruding outward, providing enough buoyancy for the main body 11 and ensuring that the main body 11 can float on the water surface to work. Furthermore, the buoyancy is provided by the foam 116 to the water surface cleaning device 1, so that the lifting amplitude of the water surface cleaning device 1 coincides with the lifting amplitude of the floatable seat 22 of the charging base station 2, and then the effective cooperation between the water surface cleaning device 1 and the charging base station 2 is ensured.

Specific examples are used for illustration of the principles and implementation methods of the present disclosure. The description of the above-mentioned embodiments is used to help illustrate the method and its core principles of the present disclosure. In addition, those skilled in the art can make various modifications in terms of specific embodiments and scope of application in accordance with the teachings of the present disclosure. In summary, the contents of this specification should not be understood as the limitation of the present disclosure.

## Claims

1. A water surface cleaning and charging integrated system, comprising a water surface cleaning device and a charging base station, wherein the water surface cleaning device is provided with a wireless charging module and a magnetic attraction module, the charging base station includes a fixed mount and a floatable seat movably installed on the fixed mount, the floatable seat is provided with a wireless charging structure and a magnetic attraction structure, and the floatable seat is configured to float up and down as water raises and falls, so that a height of the wireless charging structure is matched with a height of the wireless charging module, and a height of the magnetic attraction structure is matched with a height of the magnetic attraction module.

2. The water surface cleaning and charging integrated system according to claim 1, wherein the fixed mount comprises an installing panel and an installing support, the installing panel comprises a front panel, a rear panel and a top plate, the front panel is connected to the floatable seat, and the rear panel is connected to the installing support.

3. The water surface cleaning and charging integrated system according to claim 2, wherein the floatable seat comprises a floatable support plate, a guide frame is arranged on the floatable support plate, a guide wheel is installed on the guide frame, a strip-shaped guide hole is formed in the front panel, a guide slot parallel to the strip-shaped guide hole is formed in a back of the front panel, the guide frame passes through the strip-shaped guide hole, and the guide wheel is located in the guide slot.

4. The water surface cleaning and charging integrated system according to claim 3, wherein the floatable seat comprises a front shield installed on the floatable support plate, the front shield and the floatable support plate enclose an installing space, buoyancy materials and a seal cavity are arranged in the installing space, and the wireless charging structure, the magnetic attraction structure and a communication structure are arranged in the seal cavity.

5. The water surface cleaning and charging integrated system according to claim 2, wherein the installing support comprises an adjusting frame and a support frame, the adjusting frame is installed on the rear panel, a first installing hole is formed in the adjusting support, a plurality of second installing holes are formed in the support frame, and the first installing hole is capable of being connected to the different second installing holes to get the adjusting frame with different installing heights.

6. The water surface cleaning and charging integrated system according to any one of claims 1 to 5, wherein the water surface cleaning device comprises a main body, a cover and a filter basket, the main body is formed with an opening for the filter basket to get into and out of the main body, one side of the opening is provided with a buckle, two opposite sides of the filter basket are respectively provided with a hinge part and a clamping part, the hinge part is hinged to one side of the cover, an other side of the cover is configured for being clamped to the buckle, and the other side of the cover is capable of pressing against the clamping part; one side, where the hinge part is located, of the filter basket is provided with a limiting rib, a limiting surface is arranged at a position on an inner side of the opening corresponding to the limiting rib, the limiting rib and the limiting surface extend in an in-and-out direction of the filter basket, and the limiting surface restricts the limiting rib from rotating about the clamping part.

7. The water surface cleaning and charging integrated system according to claim 6, wherein the cover is provided with a hollow-out handle, another side, where the clamping part is located, of the filter basket is provided with a boss for being held and extends towards the handle; the main body comprises propellers, a power supply and a controller which are located on a same side of the main body and far away from the handle, an inlet of the filter basket and the clamping part is located on another same side of the main body, and when the water surface cleaning device is lifted by means of the handle, the inlet faces upwards.

8. The water surface cleaning and charging integrated system according to claim 7, wherein the inlet is provided with a rolling brush connected to a first motor, a flexible barrier strip is arranged on one side, parallel to the rolling brush, of the inlet, and a rotation direction, at the flexible barrier strip, of the rolling brush faces the filter basket.

9. The water surface cleaning and charging integrated system according to claim 8, wherein the rolling brush comprises a central shaft and guide vanes radially distributed on the central shaft, the guide vanes comprise sheet-like guide vanes and/or columnar guide vanes, and when both the sheet-like guide vanes and the columnar guide vanes are arranged on the central shaft, the sheet-like guide vanes and the columnar guide vanes are distributed at intervals in an axial direction and a circumferential direction.

10. The water surface cleaning and charging integrated system according to claim 7, wherein the main body is provided with a watertight cabin and a short wire groove, the power supply and the controller are arranged in the watertight cabin, different wires are led into the short wire groove to be gathered into a multi-core wire and led out, and the multi-core wire is connected to the watertight cabin via a watertight joint; the watertight cabin is connected to the main body by means of a detachable structure, and the multi-core wire is connected to the watertight cabin by means of another detachable structure.
